# EUROPÄISCHE PATENTSCHRIFT

(11) **EP 3 953 994 B1**
(45) Veröffentlichungstag und Bekanntmachung des Hinweises auf die Patenterteilung: **28.02.2024**
(21) Anmeldenummer: 20714197.9
(22) Anmeldetag: 25.03.2020
(51) Int. Cl.: H01R 4/36, H01R 4/66, H01R 11/11, H02G 13/00, H01R 4/48

(54) **ANSCHLUSSKOPFSTÜCK ZUM KONTAKTIEREN EINER ISOLIERTEN ABLEITUNG IM ÄUSSEREN BLITZSCHUTZ**
CONNECTION HEAD PIECE FOR CONTACTING AN INSULATED DISCHARGE LINE IN EXTERNAL LIGHTNING PROTECTION
ÉLÉMENT EXTRÊME DE CONNEXION POUR LE CONTACT AVEC UNE DÉRIVATION ISOLÉE DANS LA PROTECTION EXTÉRIEURE CONTRE LA FOUDRE

(30) Priorität: 10.04.2019 DE 102019109508; 22.07.2019 DE 102019119789
(43) Veröffentlichungstag der Anmeldung: 16.02.2022
(73) Patentinhaber: DEHN SE, 92318 Neumarkt i.d. OPf. (DE)
(72) Erfinder: LANG, Johanna, 92364 Deining (DE)
(74) Vertreter: Prinz & Partner mbB
(86) Internationale Anmeldenummer: PCT/EP2020/058288
(87) Internationale Veröffentlichungsnummer: WO 2020/207799

(56) Entgegenhaltungen:
- EP-A1- 3 062 397
- GB-A- 2 148 057

## Beschreibung

Die Erfindung geht aus von einem Anschlusskopfstück zum Kontaktieren einer isolierten Ableitung im äußeren Blitzschutz, bestehend aus einer Hülse mit einem ersten, sich axial erstreckenden Innendurchmesserabschnitt, abgestimmt auf den Außendurchmesser oder Querschnitt der isolierten Ableitung zur Aufnahme eines Endes der isolierten Ableitung sowie mit einem, sich axial anschließend erstreckenden, zweiten Innendurchmesserabschnitt, abgestimmt auf den Außendurchmesser oder Querschnitt eines abisolierten, freigelegten Leiterendes der isolierten Ableitung sowie mit Mitteln zum Fixieren des abisolierten, freigelegten Leiterendes im zweiten Innendurchmesserabschnitt gemäß Anspruch 1.

Aus der DE 10 2013 000 194 B4 ist eine Einrichtung zum Kontaktieren einer Feldsteuerschicht einer isolierten Ableitung im äußeren Blitzschutz vorbekannt. Die isolierte Ableitung ist mindestens über einen Längenabschnitt im Inneren eines Stützkörpers oder eines Stützrohres, von diesem beabstandet, geführt. Weiterhin ist ein leitfähiges Anschlusselement vorhanden, welches einerseits mit der Feldsteuerschicht sowie andererseits mit einem Potentialausgleich verbunden ist, und wobei sich das Anschlusselement im Abstandsraum zwischen der isolierten Ableitung und dem Inneren des Stützkörpers oder des Stützrohres befindet oder in diesen Abstandsraum einbringbar ist.

Das Anschlusselement selbst ist einstückig ausgebildet und weist mehrere, unter mechanischer Vorspannung oder Federkraft stehende Arme oder Finger auf, welche an der Oberfläche der Feldsteuerschicht der isolierten Anlage zur Ableitung kommen. Bei dieser Art der Ausbildung zum Kontaktieren der Feldsteuerschicht ist sichergestellt, dass bei der Montage keine Beschädigungen der Feldsteuerschicht auftreten. Der Montagevorgang ist unter Rückgriff auf die beschriebene Einrichtung schnell und intuitiv realisierbar und kann weitgehend werkzeugfrei erfolgen.

Offen bleibt bei der DE 10 2013 000 194 B4, wie die isolierte Ableitung im oberen Bereich an einem Kontaktkopfstück aufgenommen, dort kontaktiert und mechanisch fixiert wird.

Aus der Montageanleitung zur HVI^{®}Leitung, zurückgehend auf die DEHN + SÖHNE GmbH + Co. KG (siehe http://www.dehn.de/dehnacademy) ist ersichtlich, dass für die Montage von Kopfstück bzw. Anschlusselement zunächst die Isolierung der isolierten Ableitung, das heißt der HVI^{®}Leitung, abgesetzt werden muss.

Nach dem Absetzen der Isolierung wird das Kopfstück bzw. das Anschlusselement an den Leitungsenden der HVI^{®}Leitung montiert bzw. vorkonfektioniert. Dabei ist das Kopfstück bzw. das Anschlusselement an die HVI^{®}Leitung heranzuführen und mit Rechtsdrehung auf das jeweilige Leitungsende bis zum Anschlag aufzudrehen. Hierbei kann unterstützend ein Gabelschlüssel an einer vorhandenen Schlüsselfläche des Kopfstückes bzw. dem Anschlusselement angesetzt werden.

Anschließend werden zwei Gewindestifte mit einem Anzugsdrehmoment eingeschraubt, so dass eine sichere Kontaktierung mit dem Kupferleiter der HVI^{®}Leitung realisiert werden kann. Nach der Montage des Kopfstückes bzw. des Anschlusselementes sind die entsprechenden Montagebereiche zu umschrumpfen. Die Umschrumpfung ist zum Schutz vor mechanischen, umweltbedingten oder chemischen Einflüssen zwingend notwendig. Eine vorgegebene Schrumpftemperatur ist dabei unbedingt einzuhalten. Im Umschrumpfungsbereich der HVI^{®}Leitung dürfen keine zu hohen Schrumpftemperaturen angewendet werden. Bei überhöhter Schrumpftemperatur besteht die Gefahr, dass der halbleitende Mantel der HVI^{®}Leitung beeinträchtigt oder zerstört wird.

Bei der Blitzstromableitvorrichtung nach DE 20 2018 101 038 U1 wird von einer Fangeinrichtung ausgegangen, die mit einem elektrischen Leiter einer isolierten Ableiteinrichtung und letztendlich mit der Erdungsanlage zu verbinden ist. Der elektrische Leiter ist von einer Isolierung umgeben.

An dem der Fangeinrichtung zugewandten Endbereich der Isolierung und der diese umgebenden weiteren Schicht ist eine Anschlusskappe aus elektrisch leitendem Material vorhanden. Mit Hilfe dieser Anschlusskappe ist die Fangeinrichtung und/oder der elektrische Leiter mit der Zusatzschicht verbindbar.

Darüber hinaus dient die Anschlusskappe der Kontaktierung mit dem elektrischen Leiter der isolierten Ableitung.

Die Anschlusskappe ist hülsenartig ausgebildet und mit dem Hülsenmantel auf die Isolierung samt der dort vorhandenen weiteren Schicht aufbringbar. Der Hülsenboden dient als Einsteckbegrenzung für die Isolierung.

Am Hülsenboden schließt sich ein Sackloch an, in welches das abisolierte Ende des Leiters eingesteckt ist. Die Anschlusskappe wird im Bereich des Sackloches von Stiftschrauben gewindemäßig durchgriffen, die mit ihrem in das Sackloch ragenden Ende das abisolierte Ende des entsprechenden Leiters kontaktieren.

Um den Einsatz von Klebstoff oder dergleichen Mitteln zum Fixieren des Leiters in der Hülse zu vermeiden, ist nun gemäß DE 20 2018 101 038 U1 vorgeschlagen, innenliegend des Hülsenmantels der Anschlusskappe ein Formschlussteil anzuformen, welches in Montagesolllage unter Verformung der Isolierung der Ableitung formschlüssig mit dieser Isolierung verbindbar ist. Dabei soll das Formschlussteil auch die weitere Schicht mit in die Verformung der Isolierung einpressen und halten.

In bevorzugter Ausführungsform ist das Formschlussteil durch mindestens eine, einen Gewindegang bildende Rippe realisiert, die von der Innenseite des Hülsenmantels der Anschlusskappe vorragt.

Das Prinzip der DE 20 2018 101 038 U1 geht also lösungsseitig auf den Gedanken der Verformung der Isolierung zurück, um den gewünschten Formschluss zu realisieren. Hierdurch soll eine zugfeste Verbindung der entsprechenden Elemente sichergestellt und ein elektrischer Kontakt gewährleistet werden. Das Formschlussteil soll in der Montagesolllage radial in das Material der Isolierung eindringen.

Demgemäß ist die dortige Vorrichtung so ausgestaltet, dass durch das Formschlussteil, wenn es in Montagesolllage eine Verformung der Isolierung bewirkt und in diese formschlüssig eingreift, auch die zusätzliche Schicht, die eine halbleitende Schicht bildet, mitgenommen wird und in die Verformung der Isolierung einer Einpressung unterliegt.

Es hat sich jedoch in praktischer Anwendung gezeigt, dass bei einer Umsetzung der Lösung nach DE 20 2018 101 038 U1 erhebliche Kräfte beim aufschraubartigen Verbinden zwischen der isolierten Ableitung und der dortigen Anschlusskappe aufzubringen sind. Weiterhin ist nicht auszuschließen, dass bei dem Verbinden durch Drehbewegung das Formschlussteil in die halbleitende Umhüllung bzw. die Isolation sich einschneidet und diese Teile hierdurch beschädigt.

Die GB 2 148 057 A beschreibt einen Kabelverbinder zum Verbinden und Trennen zweier elektrischer Kabel, insbesondere für den Einsatz in Kraftfahrzeugen. Die beiden elektrischen Kabel sind jeweils an ihrem vorderen abisolierten Ende mit einer Olive verbunden, welche wiederum mittels eines Verbindungskopfes in einem Verbindungsstück eingeklemmt ist. Der isolierte Teil des jeweiligen Kabels wird über eine weitere Olive und ein Sicherungselement am Verbindungskopf mittels einer Schraub- und Pressverbindung befestigt. Die Verbindungsstücke sind über ein Verbindungselement miteinander gekoppelt, welches ein schnelles Trennen und Wiederverbinden ermöglicht.

Die EP 3 062 397 A1 offenbart einen Kabelverbinder für Hochspannungskabel. Der Kabelverbinder verfügt über eine axiale Bohrung, innerhalb der Bohrung axial verlaufende Drahtbürsteneinsätze und Öffnungen zur Aufnahme von Befestigungsschrauben. Die Drahtbürsteneinsätze dienen dazu, nach Einlegen des abisolierten Kabelendes Verunreinigungen oder oxidierte Schichten von dessen Oberfläche durch Rotationsbewegungen zu entfernen, bevor anschließend eine Fixierung erfolgt.

Aus dem Vorgenannten ist es daher Aufgabe der Erfindung, ein weiterentwickeltes Anschlusskopfstück zum Kontaktieren einer isolierten Ableitung im äußeren Blitzschutz anzugeben, welches zum einen eine sichere Kontaktierung der halbleitenden Schicht der isolierten Ableitung mit dem Anschlusskopfstück gestattet und bei welchem ein Ausgleich von Toleranzen hinsichtlich der durchmesserseitigen Abmessungen der isolierten Ableitung ebenso erfolgt, wie auch der elektrische Kontakt zwischen Anschlusskopfstück und halbleitender Schicht unter allen Umweltbedingungen und -einflüssen wie Klima, Feuchtetemperaturwechsel und dergleichen aufrechterhalten bleibt. Die anzugebende Lösung soll letztendlich verhindern, dass durch ein Wegfließen des Kunststoffmaterials der isolierten Ableitung die notwendige elektrische Verbindung einer funktionsbeeinträchtigenden Verschlechterung unterliegt.

Die Lösung der Aufgabe der Erfindung erfolgt mit der Ausbildung eines Anschlusskopfstückes gemäß der Merkmalskombination nach Anspruch 1, wobei die Unteransprüche mindestens zweckmäßige Ausgestaltungen und Weiterbildungen darstellen.

Es wird demnach von einem elektrisch leitfähigen, insbesondere metallischen Anschlusskopfstück zum Kontaktieren einer isolierten Ableitung im äußeren Blitzschutz ausgegangen.

Dabei sichert das Anschlusskopfstück zum einen die notwendige elektrische und blitzstromtragfähige Verbindung zwischen dem eigentlichen Leiter der isolierten Ableitung, aber auch die notwendige Kontaktierung der Feldsteuerschicht der isolierten Ableitung, das heißt der entsprechenden halbleitenden Umhüllungsschicht.

Das Anschlusskopfstück besteht aus einem hülsenförmigen Gebilde mit einem, sich axial erstreckenden ersten Innendurchmesserabschnitt, abgestimmt auf den Außendurchmesser oder den Querschnitt der eingesetzten isolierten Ableitung zur Aufnahme eines entsprechenden Endes der isolierten Ableitung sowie mit einem sich axial anschließend erstreckenden, zweiten Innendurchmesserabschnitt, abgestimmt auf den Außendurchmesser oder den Querschnitt eines abisolierten freigelegten Leiterendes der isolierten Ableitung. Weiterhin sind Mittel zum Fixieren des abisolierten, freigelegten Leiterendes im zweiten Innendurchmesserabschnitt vorhanden. Der zweite Innendurchmesserabschnitt kann als Durchgangsbohrung aber auch als Sackloch oder dergleichen realisiert werden. An dem zweiten Innendurchmesserabschnitt kann sich ein bekanntes Kopfstück, ein Anschluss für eine Fangstange oder ein Anschluss zum Anklemmen an metallische Komponenten einer äußeren Blitzschutzanlage befinden.

Erfindungsgemäß ist im ersten Innendurchmesserabschnitt der Hülse ein haftreibungserzeugendes Mittel ausgebildet, welches in das Hülseninnere derart nachgiebig hineinragt, dass beim Einschieben der Ableitung gegen den Widerstand des haftreibungserzeugenden Mittels sich ein Kraftschluss zwischen einer äußeren Hülle der isolierten Ableitung und der Hülse einstellt. Dadurch, dass das haftreibungserzeugende Mittel nachgiebig in das Hülseninnere hineinragt, ist ein Toleranzausgleich bezogen auf die jeweils angelieferte isolierte Ableitung möglich. Weiterhin sorgt die Nachgiebigkeit dafür, dass ein notwendiger elektrischer Kontakt zum Innenmantel der Hülse auch bei einem möglichen Wegfließen von Kunststoffbestandteilen der isolierten Ableitung erhalten bleibt.

Auf eine ansonsten notwendig werdende leitfähige oder halbleitende Umhüllung der Anordnung aus isolierter Ableitung und Anschlusskopfstück im entsprechenden Übergangsbereich kann in überraschender Weise verzichtet werden, so dass sich der Montagevorgang vor Ort vereinfacht und die einschlägigen Normen eingehalten werden.

In einer bevorzugten Weiterbildung der Erfindung weist die Hülse im ersten Innendurchmesserabschnitt eine Hülsenwandung auf, welche eine Aussparung zur Aufnahme eines Federelementes als haftreibungserzeugendes Mittel besitzt.

Es liegt im Sinne der Erfindung, dass hier die Hülsenwandung auch mehrere Aussparungen zur Aufnahme einer entsprechenden Vielzahl von Federelementen als haftreibungserzeugende Mittel besitzen kann. Für die Anordnung und Ausbildung mehrerer Federelemente ist maßgeblich, dass ein möglichst großer Oberflächenabschnitt der halbleitenden Schicht der isolierten Ableitung mit der metallischen Innenwandung der Hülse in Kontakt kommt. Denkbar ist bei Betrachtung des Querschnittes der Hülse eine Anordnung von Federelementen in einer Stellung zwischen im Wesentlichen 10.00 Uhr und 14.00 Uhr.

Das oder die Federelemente können an der oder den Aussparungen klemmend fixiert werden. Beim Einschieben der isolierten Ableitung in die Hülse werden das oder die Federelemente mindestens teilweise in die Aussparung hinein verdrängt, das heißt zurückgedrängt, so dass sich der Kraftaufwand beim Einschieben der isolierten Ableitung in die Hülse in Grenzen hält und dennoch eine sichere Kontaktierung und Haftung gewährleistet wird.

Das oder die Federelemente können als Blattfeder ausgebildet werden, wobei die Längsausdehnung der jeweiligen Blattfeder in axiale Richtung der Hülse verläuft, um ein zerstörendes Einschneiden, das heißt Beschädigen, insbesondere der halbleitenden Schicht der isolierten Ableitung zu vermeiden.

Das oder die Federelemente können in die Aussparung einclips- oder einrastbar ausgeführt sein.

Hierfür besitzen die entsprechenden Federelemente an ihren Längsseitenenden klammerartige Fortsätze zum Umgreifen von entsprechenden Abschnitten der Hülsenwandung im Bereich der Aussparung.

Das oder die haftreibungserzeugenden Mittel können auch als Zungenabschnitt einer Einstanzung des Hülsenmaterials ausgebildet sein, wobei ein Zungenende radial in Hülseninneres hineinragt.

Das bzw. die entsprechend freien Zungenenden erstrecken sich in Längsrichtung, das heißt axial im ersten Innendurchmesserabschnitt. Alternativ können sich die freien Zungenenden über einen Innenumfangsabschnitt der Hülse, dem Hülsenradius folgend, erstrecken.

Grundsätzlich ist der lichte Innendurchmesser des ersten Innendurchmesserabschnittes geringfügig größer als der Außendurchmesser der aufzunehmenden isolierten Ableitung gewählt.

Die haftreibungserzeugenden Mittel können einteilig, aber auch mehrteilig ausgebildet werden. Dies bedeutet, dass gemäß einem Beispiel ein Federelement als haftreibungserzeugendes Mittel aus einer Wellfeder, einer geschlitzten Blattfeder oder dergleichen Konfiguration gebildet sein kann.

Das Federelement kann aus einem elektrisch leitfähigen, insbesondere metallischen, Federmaterial bestehen. Ebenso ist es aber auch möglich, das Federelement aus einem Kunststoffmaterial zu fertigen. Maßgeblich für die Kontaktierung ist in diesem Falle die Presswirkung, das heißt das Entstehen einer Haftreibung zwischen dem entsprechenden Außenmantel der isolierten Ableitung und dem Innenmantel bzw. der Innenseite des entsprechenden Hülsenabschnittes.

Die Erfindung soll nachstehend anhand von Ausführungsbeispielen sowie unter Zuhilfenahme von Figuren näher erläutert werden.

Hierbei zeigen:

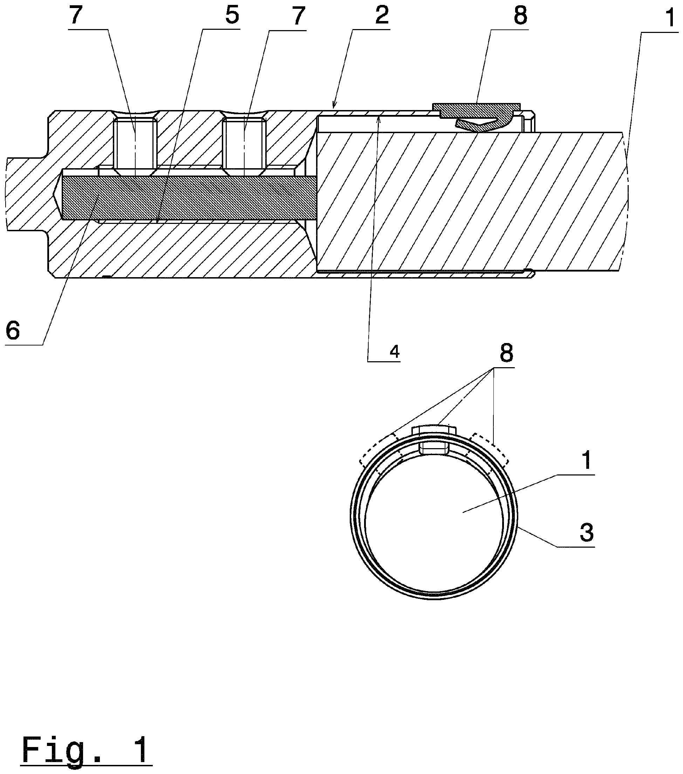

Fig. 1 eine Längs- und Querschnittsdarstellung eines Ausführungsbeispieles für ein Anschlusskopfstück mit darin aufgenommener isolierter Ableitung, welche einen freigelegten Leiterabschnitt aufweist, der in einem zweiten Innendurchmesserabschnitt der Hülse des Anschlusskopfstückes fixiert ist, sowie einem haftreibungserzeugenden Mittel, ausgebildet als Federelement;

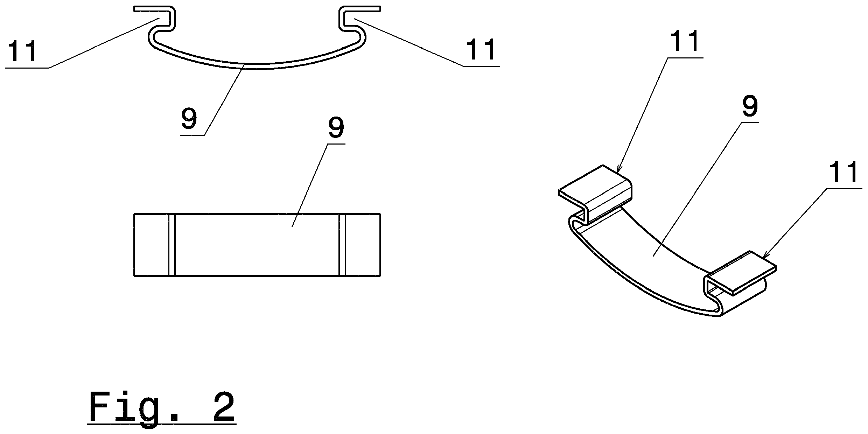

Fig. 2 eine Seitenansicht, eine Draufsicht sowie eine perspektivische Darstellung eines Federelementes als haftreibungserzeugendes Mittel;

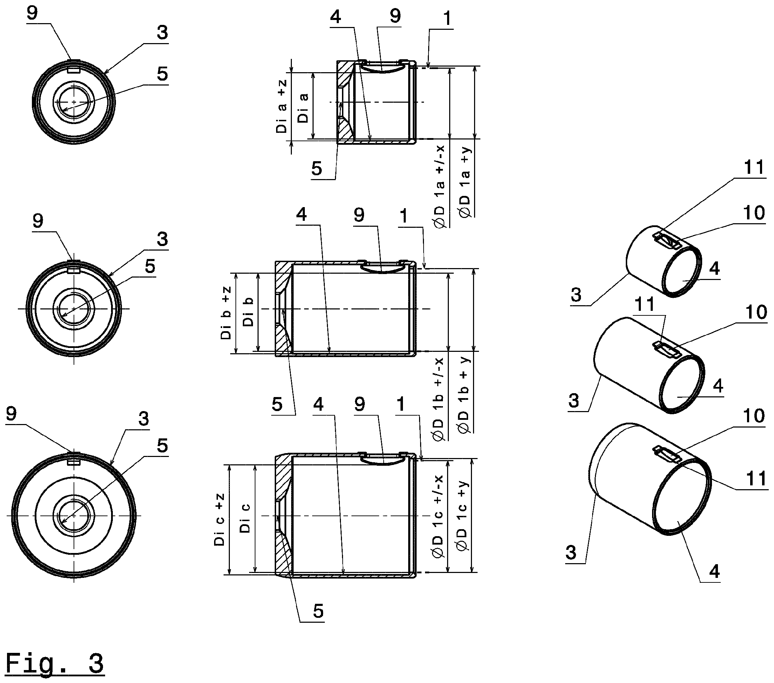

Fig. 3 mehrere beispielhafte Vorderansichten, Längsschnittdarstellungen sowie perspektivische Darstellungen eines Anschlusskopfstückes mit erstem, sich axial erstreckenden Innendurchmesserabschnitt nebst Aussparung zur Aufnahme eines Federelementes wie in der Fig. 2 gezeigt, wobei die Durchmesserangaben Ausführungsformen von Anschlusskopfstücken für isolierte Ableitungen mit unterschiedlichen Durchmessern repräsentieren. Darüber hinaus wird mit den beispielhaften Maßgaben deutlich gemacht, inwieweit der lichte Innendurchmesser des ersten Innendurchmesserabschnittes der Hülse geringfügig größer als der Außendurchmesser der aufzunehmenden jeweiligen isolierten Ableitung gewählt wird;

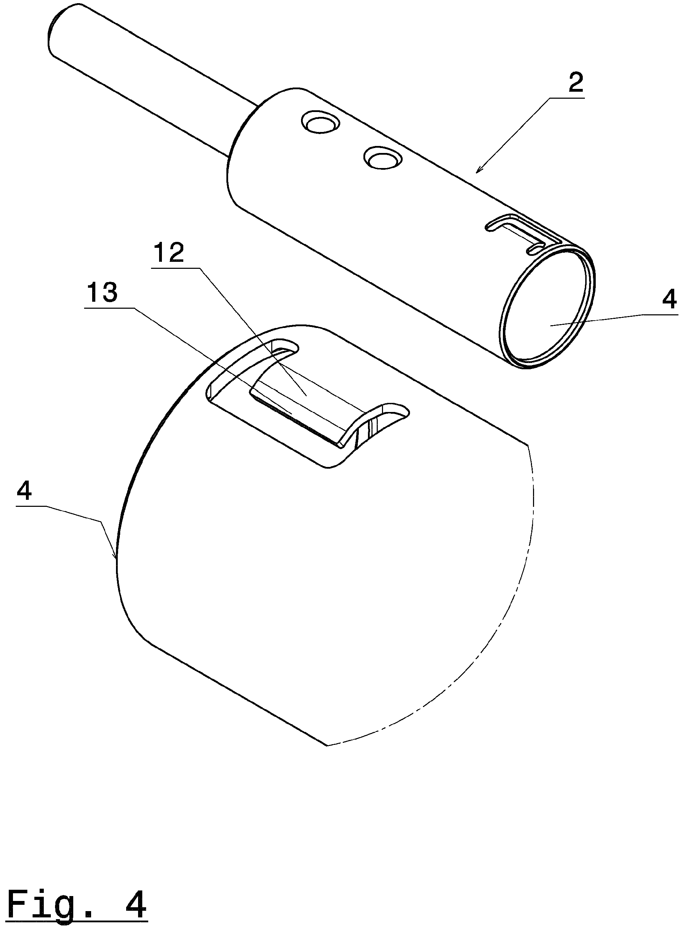

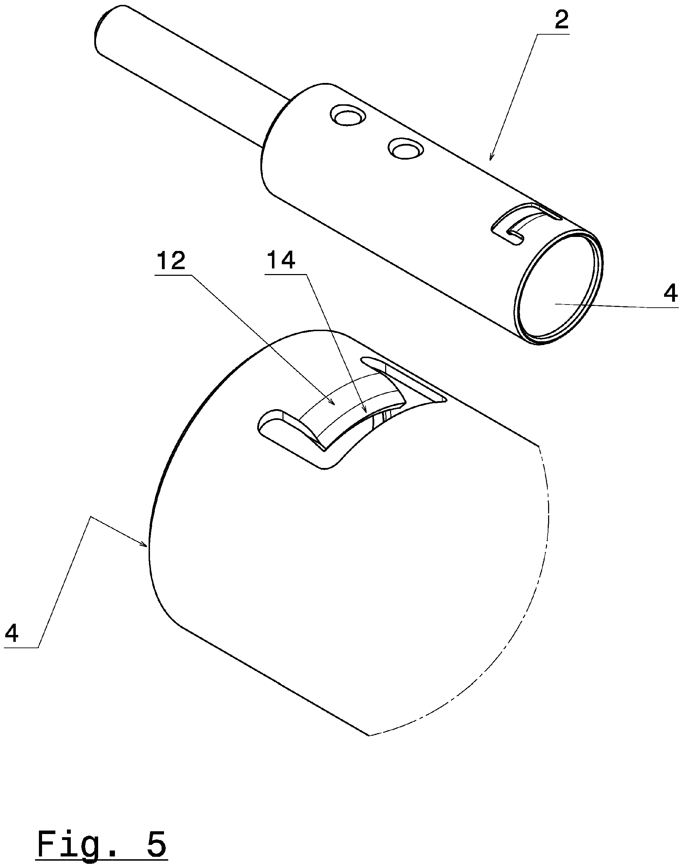

Fig. 4 und 5 perspektivische Darstellungen sowie Detaildarstellungen einer weiteren Ausführungsform zur Ausbildung eines haftreibungserzeugenden Mittels in Form einer Einstanzung des Hülsenmaterials zur Bildung eines Zungenabschnittes, wobei ein freies Zungenende radial in Richtung des Hülseninneren hineinreicht und gemäß Figur 4 das freie Zungenende sich in Längsrichtung, das heißt axial, im ersten Innendurchmesserabschnitt erstreckt oder gemäß Figur 5, bei dem das freie Zungenende sich über einen Innenumfangsabschnitt der Hülse, dem Hülsenradius folgend, erstreckt.

Der grundsätzliche Aufbau eines beispielhaften Anschlusskopfstückes ist den Darstellungen gemäß Figur 1 bzw. 4 und 5 entnehmbar.

Das zum Kontaktieren einer isolierten Ableitung 1 dienende Anschlusskopfstück 2 besteht aus einer Hülse 3.

Die Hülse 3 weist einen ersten, sich axial erstreckenden Innendurchmesserabschnitt 4 auf, der auf den Außendurchmesser oder den Querschnitt der isolierten Ableitung 1 abgestimmt ist. Dieser erste, sich axial erstreckende Innendurchmesserabschnitt 4 nimmt ein entsprechendes Ende der isolierten Ableitung 1 in seinem Inneren auf.

Weiterhin besitzt die Hülse einen, sich axial anschließend erstreckenden, zweiten Innendurchmesserabschnitt 5.

Dieser ist abgestimmt auf den Außendurchmesser oder den Querschnitt eines abisolierten freigelegten Leiterendes 6 der isolierten Ableitung 1.

Weiterhin sind z.B. Madenschrauben 7 als Mittel zum Fixieren des abisolierten, freigelegten Leiterendes 6 im zweiten Innendurchmesserabschnitt 5 vorhanden.

Im ersten Innendurchmesserabschnitt 4 der Hülse 3 ist ein haftreibungserzeugendes Mittel, ausgebildet als Federelement 8, vorhanden.

Dieses Federelement 8 ragt gemäß der Längsschnittdarstellung nach Figur 1 in das Hülseninnere derart nachgiebig hinein, dass beim Einschieben der Ableitung 1 sich ein Kraftschluss zwischen einer dortigen äußeren Hülle (nicht im Detail gezeigt) der isolierten Ableitung 1 und der Hülse 3 einstellt.

Diesbezüglich weist die Hülsenwandung im Bereich des ersten Innendurchmesserabschnittes 4 eine Aussparung 10 zur Aufnahme des Federelementes 8 als dem krafterzeugenden Mittel auf.

Die Querschnittsdarstellung nach Figur 1, unteres Bild, macht deutlich, dass verschiedene Positionen zwischen im Wesentlichen 10.00 Uhr und 14.00 Uhr für die Aussparung einschließlich dort eingesetztem Federelement 8 wählbar sind. Maßgeblich ist in jedem Falle, dass das entsprechende Ende der isolierten Ableitung mit seinem Außenmantel innig in elektrischem Kontakt mit dem Innenmantel der Hülse bzw. des Anschlusskopfstückes gelangt.

Die Ansichten gemäß Figur 2 zeigen ein beispielhaftes, hier bevorzugt metallisch ausgebildetes Federelement 9.

Dieses Federelement 9 ist als Blattfeder realisiert, wobei die Längsausdehnung der Blattfeder in axialer Richtung zur Hülse 3 (siehe Figur 3) verläuft.

Aus den Abbildungen gemäß der Figur 3 wird auch für den Fachmann nachvollziehbar, wie das betreffende Federelement 9 in der Hülsenaussparung 10 klemmenfixiert ist und wie mit dem Einstecken bzw. Einschieben der isolierten Ableitung in die Hülse das Federelement 9 teilweise in die Aussparung 10 zurückgedrängt, das heißt verdrängt wird.

Das Federelement 9 ist in die Aussparung 10 einclips- bzw. einrastbar.

Diesbezüglich weist das Federelement 9 an seinen Längsseitenenden klammerartige Fortsätze 11 auf, die dem Umgreifen von entsprechenden Abschnitten der Hülsenwandung im Bereich der Aussparung 10 dienen.

Den Darstellungen nach den Figuren 4 und 5 folgend, kann das krafterzeugende Mittel auch als Zungenabschnitt 12 einer Einstanzung des Hülsenmaterials ausgebildet werden, wobei ein freies Zungenende 13 radial in Richtung des Hülseninneren hineinreicht.

Das freie Zungenende 13 kann sich in Längsrichtung, das heißt axial, im ersten Innendurchmesserabschnitt 4 der Hülse befinden, wie dies die Figur 4 deutlich macht.

Alternativ besteht die Möglichkeit, die Einstanzung derart zu realisieren, wie dies in Figur 5 dargestellt ist. In diesem Falle erstreckt sich das freie Zungenende 14 radial, dem Hülsenradius folgend, in das Innere des ersten Innendurchmesserabschnittes 4 der Hülse.

Anhand den Querschnitts-, Längsschnitts- und perspektivischen Darstellungen gemäß den Figuren 3 ist ersichtlich, wie der lichte Innendurchmesser des ersten Innendurchmesserabschnittes 4 der Hülse geringfügig größer als der Außendurchmesser einer im Durchmesser unterschiedlichen (dort nicht gezeigten) isolierten Ableitung gewählt werden muss und um welches Maß das dort gezeigte Federelement in den ersten Innendurchmesserabschnitt der Hülse hineinragen darf, so dass einerseits ein werkzeugfreies, leichtes Einschieben der isolierten Ableitung in das Anschlusskopfstück erfolgen kann und andererseits die notwendige, haftreibungsbedingte Kraftschlussverbindung unter allen Umwelt- und Einsatzbedingungen erhalten bleibt.

Das Federelement 8 kann wie bereits erläutert bei einem Beispiel als Blattfeder ausgebildet werden, wobei die Längsausdehnung eines solchen Federelementes in axialer Richtung der Hülse 3 verläuft. Alternativ besteht aber auch die Möglichkeit, ein nachgiebiges Formstück, zum Beispiel ausgebildet als Drahtgebilde, radial oder tangential bezogen auf die Hülse 3 auszuführen, wobei letztendlich maßgeblich ist, dass ein diesbezüglicher Bereich des Elementes in das Hülseninnere nachgiebig hineinragt, so dass beim Einschieben der Ableitung 1 sich ein entsprechender Kraftschluss zwischen einer äußeren Hülle der isolierten Ableitung 1 und der Hülse 3 einstellt.

## Patentansprüche

1. Anschlusskopfstück (2) zum Kontaktieren einer isolierten Ableitung (1) im äußeren Blitzschutz, bestehend aus einer Hülse (3) mit
einem, sich axial erstreckenden, ersten Innendurchmesserabschnitt (4), abgestimmt auf den Außendurchmesser oder Querschnitt der isolierten Ableitung (1) zur Aufnahme eines Endes der isolierten Ableitung (1) sowie mit
einem, sich axial anschließend erstreckenden, zweiten Innendurchmesserabschnitt (5), abgestimmt auf den Außendurchmesser oder Querschnitt eines abisolierten, freigelegten Leiterendes (6) der isolierten Ableitung (1) sowie mit
Mitteln (7) zum Fixieren des abisolierten, freigelegten Leiterendes (6) im zweiten Innendurchmesserabschnitt (5), **dadurch gekennzeichnet, dass**
im ersten Innendurchmesserabschnitt (4) der Hülse (3) ein haftreibungserzeugendes Mittel ausgebildet ist, welches in das Hülseninnere derart nachgiebig hineinragt, dass beim Einschieben der Ableitung (1) sich ein Kraftschluss zwischen einer äußeren Hülle der isolierten Ableitung (1) und der Hülse (3) einstellt.

2. Anschlusskopfstück nach Anspruch 1, **dadurch gekennzeichnet, dass** die Hülse (3) eine Hülsenwandung aufweist, welche eine Aussparung (10) zur Aufnahme eines Federelementes (9) als haftreibungserzeugendes Mittel besitzt.

3. Anschlusskopfstück nach Anspruch 2, **dadurch gekennzeichnet, dass** das Federelement (9) an oder in der Aussparung (10) klemmend fixiert ist und bei welchem mit dem Einschieben der isolierten Ableitung (1) in die Hülse (3) das Federelement (9) teilweise in die Aussparung (10) verdrängt wird.

4. Anschlusskopfstück nach Anspruch 2, **dadurch gekennzeichnet, dass** das Federelement (9) als Blattfeder ausgebildet ist, wobei die Längsausdehnung der Blattfeder (9) in axialer Richtung der Hülse (3) verläuft.

5. Anschlusskopfstück nach einem der Ansprüche 2 bis 4, **dadurch gekennzeichnet, dass** das Federelement (9) in die Aussparung (10) einclips- oder einrastbar ist.

6. Anschlusskopfstück nach einem der Ansprüche 2 bis 5, **dadurch gekennzeichnet, dass** das Federelement (9) an seinen Längsseitenenden klammerartige Fortsätze (11) zum Umgreifen von Abschnitten der Hülsenwandung im Bereich der Aussparung (10) aufweist.

7. Anschlusskopfstück nach Anspruch 1, **dadurch gekennzeichnet, dass** das haftreibungserzeugende Mittel als Zungenabschnitt (12) einer Einstanzung des Hülsenmantels ausgebildet ist, wobei ein freies Zungenende (13) radial in Richtung Hülseninneres hineinreicht.

8. Anschlusskopfstück nach Anspruch 7, **dadurch gekennzeichnet, dass** das freie Zungenende (13; 14) sich in Längsrichtung, das heißt axial im ersten Innendurchmesserabschnitt (4) oder über einen Innenumfangsabschnitt der Hülse (3) dem Hülsenradius folgend, erstreckt.

9. Anschlusskopfstück nach einem der vorangegangenen Ansprüche, **dadurch gekennzeichnet, dass** der lichte Innendurchmesser des ersten Innendurchmesserabschnittes (4) geringfügig größer als der Außendurchmesser der aufzunehmenden isolierten Ableitung (1) gewählt ist.

10. Anschlusskopfstück nach einem der Ansprüche 1 bis 9, **dadurch gekennzeichnet, dass** das haftreibungserzeugende Mittel ein- oder mehrteilig ausgebildet ist.

11. Anschlusskopfstück nach einem der Ansprüche 1 bis 6, **dadurch gekennzeichnet, dass** das Federelement (9) elektrisch leitfähig ist oder aus einem isolierenden Material besteht.

12. Anschlusskopfstück nach einem der Ansprüche 2 bis 11, **dadurch gekennzeichnet, dass** die Aussparung (10) als Rücksprung des Mantelmaterials der Hülse (3) oder als Durchbruch ausgebildet ist.

## Claims

1. A connection head piece (2) for contacting an insulated down conductor (1) in external lightning protection, consisting of a sleeve (3) having
an axially extending first inner diameter section (4) adjusted to the outer diameter or cross-section of the insulated down conductor (1) for receiving one end of the insulated down conductor, and having
a second inner diameter section (5) extending axially adjacent thereto and adjusted to the outer diameter or cross-section of a stripped, exposed conductor end (6) of the insulated down conductor (1), and
means (7) for fastening the stripped, exposed conductor end (6) in the second inner diameter section (5), **characterized in that**
a static friction-generating means is formed in the first inner diameter section (4) of the sleeve (3) and flexibly projects into the interior of the sleeve such that a nonpositive fit is established between an outer sheath of the insulated down conductor (1) and the sleeve (3) upon insertion of the down conductor (1).

2. The connection head piece according to claim 1, **characterized in that** the sleeve (3) has a sleeve wall which includes a recess (10) for receiving a spring element (9) as a static friction-generating means.

3. The connection head piece according to claim 2, **characterized in that** the spring element (9) is fixed in a clamping manner to or in the recess (10), and in which the spring element (9) is partially displaced into the recess (10) upon insertion of the insulated down conductor (1) into the sleeve (3).

4. The connection head piece according to claim 2, **characterized in that** the spring element (9) is configured as a leaf spring, the longitudinal extent of the leaf spring (9) running in the axial direction of the sleeve (3).

5. The connection head piece according to any of claims 2 to 4, **characterized in that** the spring element (9) is adapted to be clipped or to latch into the recess (10).

6. The connection head piece according to any of claims 2 to 5, **characterized in that** on its long side ends, the spring element (9) has clamp-like projections (11) for engaging around sections of the sleeve wall in the area of the recess (10).

7. The connection head piece according to claim 1, **characterized in that** the static friction-generating means is formed as a tongue section (12) of a punching of the sleeve jacket, a free tongue end (13) projecting radially in the direction of the sleeve interior.

8. The connection head piece according to claim 7, **characterized in that** the free tongue end (13; 14) extends in the longitudinal direction, i.e. axially in the first inner diameter section (4) or over an inner peripheral section of the sleeve (3) following the sleeve radius.

9. The connection head piece according to any of the preceding claims, **characterized in that** the clear inner diameter of the first inner diameter section (4) is selected to be slightly larger than the outer diameter of the insulated down conductor (1) to be received.

10. The connection head piece according to any of claims 1 to 9, **characterized in that** the static friction-generating means is configured in one or several pieces.

11. The connection head piece according to any of claims 1 to 6, **characterized in that** the spring element (9) is electrically conductive or is made of an insulating material.

12. The connection head piece according to any of claims 2 to 11, **characterized in that** the recess (10) is configured as an offset of the jacket material of the sleeve (3) or as an opening.

## Revendications

1. Pièce de tête de raccordement (2) pour contacter un conducteur isolé de descente (1) dans le parafoudre extérieur, composée d'une douille (3) comprenant
un premier tronçon de diamètre intérieur (4) qui s'étend axialement et qui est adapté au diamètre extérieur ou à la section transversale du conducteur isolé de descente (1) pour recevoir une extrémité du conducteur isolé de descente (1), et comprenant
un deuxième tronçon de diamètre intérieur (5) qui s'étend axialement de manière adjacente et qui est adapté au diamètre extérieur ou à la section transversale d'une extrémité de conducteur dénudée et exposée (6) du conducteur isolé de descente (1), et comprenant
des moyens (7) pour fixer l'extrémité de conducteur dénudée et exposée (6) dans le deuxième tronçon de diamètre intérieur (5), **caractérisée en ce que**
un moyen générant un frottement statique est réalisé dans le premier tronçon de diamètre intérieur (4) de la douille (3), lequel fait élastiquement saillie dans l'intérieur de la douille de telle sorte que lors de l'insertion du conducteur de descente (1), une liaison par coopération de forces est établie entre une douille extérieure du conducteur isolé de descente (1) et la douille (3).

2. Pièce de tête de raccordement selon la revendication 1, **caractérisée en ce que** la douille (3) présente une paroi de douille présentant un évidement (10) pour la réception d'un élément à ressort (9) en tant que moyen générant un frottement statique.

3. Pièce de tête de raccordement selon la revendication 2, **caractérisée en ce que** l'élément à ressort (9) est fixé par serrage sur ou dans l'évidement (10), et dans laquelle l'élément à ressort (9) est partiellement déplacé dans l'évidement (10) lors de l'insertion du conducteur isolé de descente (1) dans la douille (3).

4. Pièce de tête de raccordement selon la revendication 2, **caractérisée en ce que** l'élément à ressort (9) est réalisé sous forme de ressort à lames, l'extension longitudinale du ressort à lames (9) s'étendant selon le sens axial de la douille (3).

5. Pièce de tête de raccordement selon l'une des revendications 2 à 4, **caractérisée en ce que** l'élément à ressort (9) est apte à être clipsé ou enclenché dans l'évidement (10).

6. Pièce de tête de raccordement selon l'une des revendications 2 à 5, **caractérisée en ce que** l'élément à ressort (9) présente à ses extrémités de grand côté des saillies (11) en forme de bride pour entourer des parties de la paroi de douille dans la zone de l'évidement (10).

7. Pièce de tête de raccordement selon la revendication 1, **caractérisée en ce que** le moyen générant un frottement statique est réalisé sous forme de tronçon de languette (12) d'une découpe de l'enveloppe de douille, une extrémité de languette libre (13) faisant saillie radialement en direction de l'intérieur de la douille.

8. Pièce de tête de raccordement selon la revendication 7, **caractérisée en ce que** l'extrémité de languette libre (13 ; 14) s'étend dans le sens longitudinal, c'est-à-dire axialement dans le premier tronçon de diamètre intérieur (4) ou sur un tronçon de périphérie intérieure de la douille (3) en suivant le rayon de la douille.

9. Pièce de tête de raccordement selon l'une des revendications précédentes, **caractérisée en ce que** le diamètre intérieur libre du premier tronçon de diamètre intérieur (4) est choisi légèrement supérieur au diamètre extérieur du conducteur isolé de descente (1) à recevoir.

10. Pièce de tête de raccordement selon l'une des revendications 1 à 9, **caractérisée en ce que** le moyen générant un frottement statique est réalisé en une pièce ou en plusieurs pièces.

11. Pièce de tête de raccordement selon l'une des revendications 1 à 6, **caractérisée en ce que** l'élément à ressort (9) est électriquement conducteur ou est réalisé en un matériau isolant.

12. Pièce de tête de raccordement selon l'une des revendications 2 à 11, **caractérisée en ce que** l'évidement (10) est réalisé sous forme de retrait du matériau de l'enveloppe de la douille (3) ou sous forme d'ouverture.
